# EUROPEAN PATENT SPECIFICATION

(11) **EP 0 531 796 B1**
(45) Date of publication and mention of the grant of the patent: **17.12.1997**
(21) Application number: 92114499.4
(22) Date of filing: 26.08.1992
(51) Int. Cl.: H04M 9/08, H04B 3/23

(54) **Method and device for acoustic echo adaptive cancellation**
Verfahren und Vorrichtung zur adaptiven akustischen Echokompensation
Procédé et dispositif pour l'annulation adaptative d'echo acoustique

(30) Priority: 10.09.1991 ES 9102024
(43) Date of publication of application: 17.03.1993
(73) Proprietor: ALCATEL STANDARD ELECTRICA, S.A., ES-28045 Madrid (ES)
(72) Inventor: Paez Borrallo, Jose Manuel, E-28230 Las Rozas, Madrid (ES); Garcia Otero, Mariano, E-28003 Madrid (ES); Ruiz Mezcua, Belén, E-28223 Pozuelo de Alarcon, Madrid (ES)
(74) Representative: Pohl, Herbert, Dipl.-Ing.

(56) References cited:
- EP-A- 0 301 627
- PHILIPS TELECOMMUNICATION REVIEW vol. 49, no. 1, March 1991, HILVERSUM NL pages 19 - 27 , XP227060 W. ARMBRÜSTER ET AL. 'Hands-free telephony, speech recognition and coding techniques implemented in the SPS51'
- IEEE GLOBAL TELECOMMUNICATIONS CONFERENCE vol. 3/3, November 1983, SAN DIEGO, CA USA pages 1389 - 1393 T.HAYASHI ET AL. 'Echo canceller with effective double talk control'
- PATENT ABSTRACTS OF JAPAN vol. 012, no. 020 (E-575)21 January 1988 & JP-A-62 176 337 ( OKI ELECTRIC IND CO LTD ) 3 August 1987
- IEICE TRANSACTIONS vol. E74, no. 8, August 1991, TOKYO JP pages 2276 - 2282 , XP268462 M.R.ASHARIF ET AL. 'Frequency Bin Adaptive Filtering (FBAF) algorithm and its Application to Acoustic Echo Cancelling'

## Description

This invention, as stated in the title of this document, concerns a method and a device for adaptive cancellation of acoustic echoes, having the objective to eliminate or, at least, drastically reduce, the unwanted echo added to broadband acoustic signals that allow voice signals to be transmitted back and forth over telecommunications systems simultaneously.

The estimated echo subtracts from the signal to be transmitted by means of a digital process of the signals involved, which includes a filtering phase, done in a mixed form in the time and frequency domains, and an adaption phase.

Consequently the invention is preferably applicable to the adaptive filtering of acoustic signals in relation to the cancellation in real-time of acoustic echoes, especially in systems for teleconferencing, hands-free telephones, or videotelephones.

### BACKGROUND TO THE INVENTION

Real-time acoustic echo cancellers are well-known For broadband use. To date, however, they all use various digital signal processors, whereby the speed of convergence of the adaptive algorithm employed does not constitute a critical problem for these cancellers, nevertheless these cancellers do have the logical inconveniences of greater cost and size than if they were implemented using a single digital signal processor.

Adaptive filtering of a signal in the time or frequency domains is also well-known. If the filtering is done exclusively in the frequency domain, it is not applicable to echo cancellers, as excessive delays occur. If it is done in the time domain exclusively, a high number of operations is required, meaning that several digital signal processors have to be used with the currently available technology. Mixed filtering procedures in the time and frequency domains are also well-known; these minimize the inconveniences of the great delays and the excessive number of operations mentioned above.

An acoustic echo canceller that uses mixed filtering procedures in the time and frequency domains can be found in the European Patent Application EP 0 301 627 that discloses a digital echo canceller that comprises a first filter for the echo cancellation proper, a second adaptive filter for making continuously adapter filter coefficients available to the first filter and gate means which will only apply the adapter filter coefficients to the first filter if certain conditions are satisfied, for instance in case of double-talk.

Said echo canceller comprises a time domain programmable filter, the coefficients of which are calculated by a frequency domain adaptive filter and then transformed into coefficients in time domain to be used in said time domain programmable filter Although the digital echo canceller has a considerable numbers of computational operation since the values of the N filter coefficients of adaptive filter are continuously adapted. During the double-talk its gate means are blocked and the supply of adapted filter coefficients is interrupted.

### TECHNICAL PROBLEM TO BE OVERCOME

Consequently the technical problem to be solved has two aspects. The first is to improve the performance of the acoustic echn canceller, having the adaption stage of the adaptive echo cancellation process make allowance for the local spectral characteriRtics of the voice signal and a measure of spectral uniformity, endowing the system with strength when confronted with poorly conditioned signals. The second is to increase the rate of convergence of the adaptive algorithm that performs the cancellation of the acoustic echoes in such a way that, despite the increased computational load produced by the extra calculation made on the voice signal spectrum, the real-time implementation of the acoustic echo canceller can be achieved using a single Digital Signal Processor.

### CHARACTERISATION OF THE INVENTION

To achieve the objectives described In the preceding section, this invention consists of a new procedure for ndnptlve cancellation of acoustic echoes and a device that implements this procedure in rent time according to Claim 1.

The procedure for adaptive cancellation of acoustic echoes, that is based on subtracting the estimated echo components from an acoustic signal to be transmitted, in order to eliminate problems of acoustical feedback, as much as possible, which is implemented by means of digital signal processing that includes a filtering stage carried out in a mixed form in both the time and frequency domains and an adaption phase, is characterised in that this adaption phase includes an additional stage for the generation of an inhibition vector associated with the activity monitoring stage of the transmission and reception lines.

The procedure described here is also characterised in that the generation of the inhibition vector of the different filter segments takes into account, firstly, the presence or lack of double-talking, detected by an activity monitor, and secondly implants an adaption strategy that establishes the adaptive filter sections whose coefficients have to be updated in each iteration.

Preferably, this strategy consisting in updating in each iteration the first sections of the filter, which are those that contain most information on the echo, and one of the remaining sections in a cyclic manner so that each section is updated at least once in a certain period of time.

Another characteristic of this procedure is that the calculation of the adaption step, that is done independently for each filter segment uninhibited in a given iteration, takes into account the local spectral characteristics of the voice signal and the spectral uniformity.

To do this, in the first place, a calculation is made of:
- a maximum permissible value of the adaption step, this being a function of the total power, of the spectral uniformity and of the voice spectrum distribution, and
- certain individual values of the adaption step of each spectral bar, these values being inversely proportional to the power of these spectral bars.

In second place, for each spectral bar, the minimum is selected between the individual value calculated for this bar and the maximum permissible value in the adaption step.

Afterwards, the total vector of the adaption steps of weighted by a decreasing monotonic function that depends on the power of the residual echo.

Finally, this procedure is characterised in that the updating of the coefficients of the adaptive filter is done in ench iteration as a function of the calculated adaption step, of the strategy imposed by the inhibition vector and of a variable exponential weighting, depending on the measured spectral spread, allocated to each filter section. This weighting is done in order to reduce the effect of noise produced by the most significant sections over the least significant sections.

With respect to the device that implements the procedure of the invention, it is charactersied in that it includes an inhibition block controlled by an activity monitor. This inhibition block also implements the adaption strategy and indicates to the adaptive algorithm block which sections of the filter are to he updated in each iteration.

The activity monitor informs the inhibition block of the activity detected in the transmission and reception lines by their respective activity detectors, providing indication of the presence of double-talking, in which case the adaptive process is stopped by inhibiting the updating of all filter coefficients and maintaining them in the proximity of the static solution.

The device also includes a block for calculation of the adaption step connected to the activity monitor, to the adaptive algorithm block and to the reception line, which performs an instantaneous tracking of the total power and of the spectral distribution of the signal, adjusting the size of the adaption step.

The advantages offered by this invention can be summarised as follows:
- improved performance of the echo canceller, by taking into account the local characteristics of the voice signal, regardless of the characteristics of the input signal,
- increase in the convergence rate of the adaptive algorithm, and
- possibility of implementing the canceller using a single digital signal processor.

### BRIEF FOOTNOTES TO THE FIGURES

Figure 1 shows a diagram with the different phases and stages that comprise the adaptive echo cancellation procedure, the object of the invention.

Figure 2 shows a block diagram of a preferred implementation of the device that puts the procedure of the invention into practice. In this figure the data signals have been shown by continuous lines nnd the control signals by dashed lines.

### DESCRIPTION OF THE INVENTION

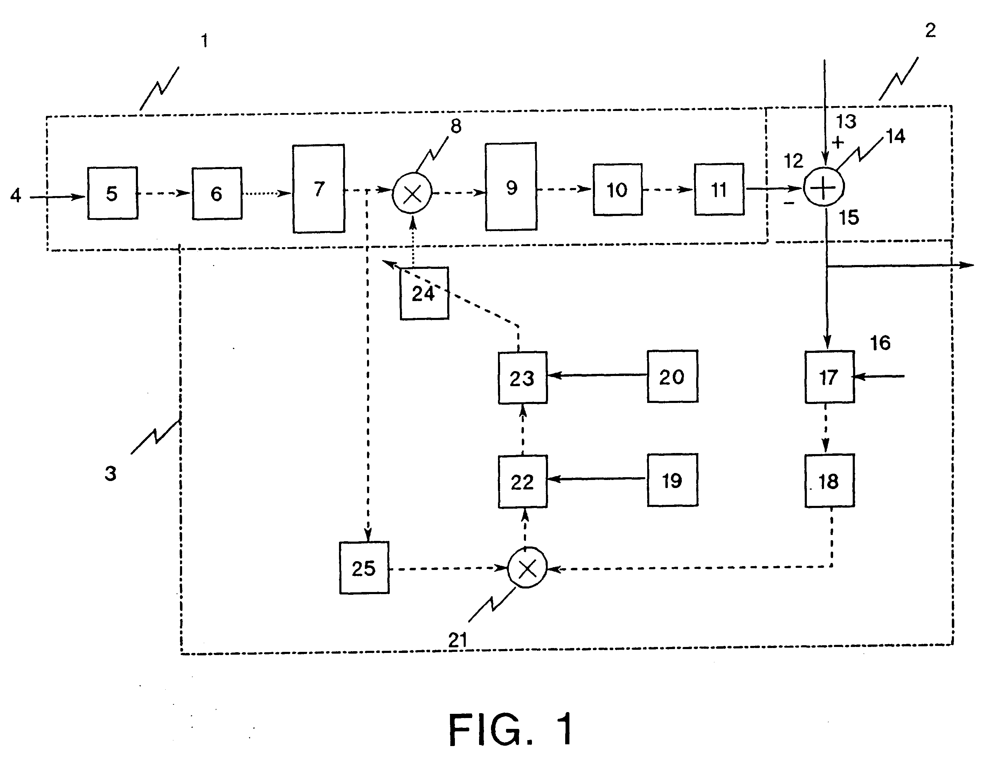

Figure 1 illustrates the procedure for acoustic echo adaptive cancellation acoustic echoes of the invention and comprises three stages: a filtering stage 1, a substracting stage 2 of the estimated echo components from the near signal plus echo (or the actual cancellation), and an adaption stage 3.

In the filtering stage 1, the transmit signal 4 is taken and subjected to a chopping process 5 in time; and its fast Fourier transforms (FFT) 6 are then calculated. The results are then stacked in a FIFO-type memory 7, along with the FFTs resulting from the previous chopping processes. Frequency-domain filtering is then done by multiplying 8 the filtering coefficients 24 of each section of the filter by the frequency components of the inputs stacked in the FIFO memory 7. Subsequently, the frequency components of the different sections of the filter are added 9, and on this sum 9, the inverse Fourier transform 10 (IFT) calculated, returning then to the time domain through the output chopping 11 and so obtaining the filtered signal identified as the estimated echo 12.

The subtraction phase 2 actually carries out the cancellation. This cancellation consists of subtracting 14, the estimated echo signal 12 from the near signal plus echo 13, for the purpose of producing a near signal plus residual echo 15 in which the residual echo has less power than the original echo. This signal 15 is transmitted directly to the transmission line.

The adaption phase 3 performs the updating of the filter coefficients. As reference, the near signal plus residual echo 15 is used; this is segmented 17, and a vector of zero components 16 is incorporated in this process. The fast Fourier transform 18 (FFT) is calculated for the data segment so formed, returning then to the frequency domain.

In order to calculate the correcting term for the coefficients of each filter section, the conjugates of the frequency components 7 of the corresponding input segmentations are obtained 25, and are multiplied 21 by the frequency components of the near signal plus residual echo 18. These correcting terms are those that update the filtering coefficients 24 of each section of the filter according to the imposition of a CLMS algorithm (Complex Least Mean Square) 23 that corrects the coefficients as a function of the value of a correcting term and an adaption step previously calculated. This updating can be inhibited 22 according to the information on local activity and double-talking of the signals involved, which is obtained by the monitoring 19 of the transmission and reception lines.

The adaptive strategy comprises of updating the first filter sections in each iteration, that contain the most information on echo, and one of the remaining sections on a cyclic basis so that each section is updated at least once in a given period of time.

The calculation of the adaption step, that is done independently for each section of the filter uninhibited in a given iteration, takes into account the local spectral characteristics of the voice signal and the spectral uniformity.

To do this, in the first place a calculation is made of:
- a maximum permissible value for the adaption step, this being a function of the total power, of the spectral uniformity and of the voice spectrum distribution, and
- certain individual values of the adaption step for each spectral bar, these values being inversely proportional to the power of these spectral bars.

Secondly, for each spectral bar, the minimum is selected between the individual value calculated for this spectral bar and the maximum admissible value for the adaption step.

Finally the total vector of the adaption steps is weighted by a decreasing monotonic function depending on the power of the residual echo.

The updating of the coefficients of the adaptive filter 31 takes place in each iteration as a function of the adaption step calculated, of the strategy imposed by the inhibition vector 22, and of a variable exponential weighting, depending on the measurement of the spectral spread, allocated to each filter section. The weighting is done in order to reduce the effect of noise produced by the most significant sections over the least significant sections.

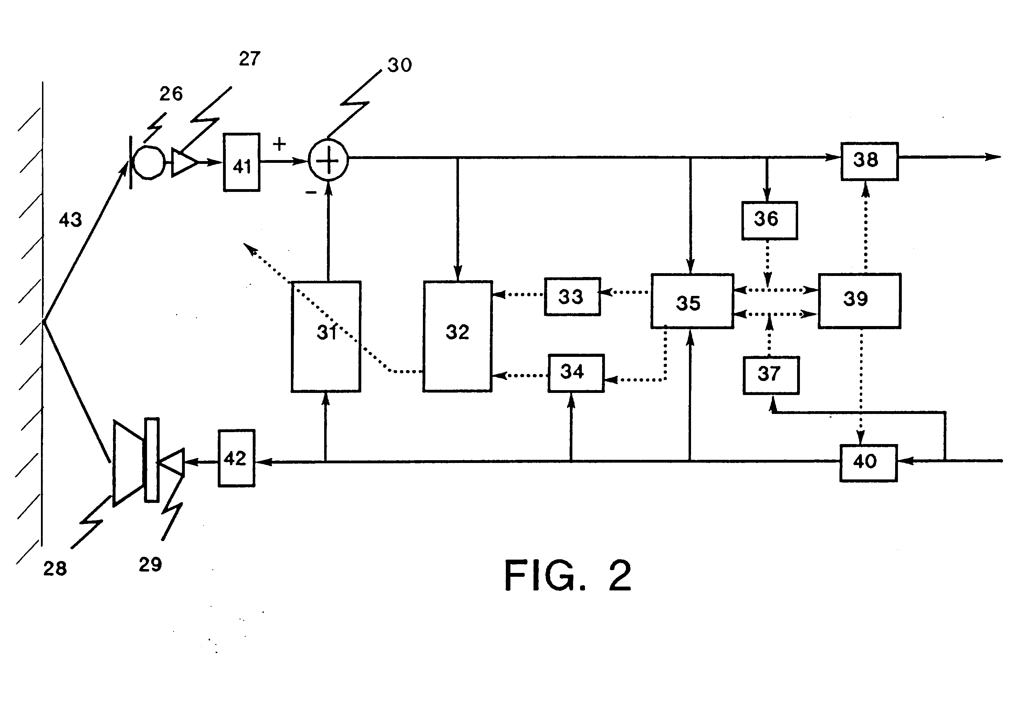

Figure 2 shows a preferred implementation of the procedure described above.

The echo signal 43, produced by acoustic feedback in a reverberating enclosure between a loudspeaker 28 and a microphone 26, that it is desired to suppress, passes through the analog elements formed by the microphone 26 and the preamplifier 27 to feed an analog to digital converter 41 that provides the digital presentation of the echo mentioned.

The adaptive filter 31 takes the signal supplied to the loudspeaker 28 before its conversion to analog format 42 and its preamplification 29, and tries to form a reproduction of the echo as similar as possible in order to cancel it by simple subtraction 30. The near signal plus residual echo remaining holds the information required to permit the adaptive algorithm 32 to correct the coefficients of the adaptive filter 31 in the appropriate direction. The adaptive algorithm 32 makes use of an adaption step vector 34 and information contained in the inhibition block 33. Both items of information incorporate important innovations with respect to conventional adaptive echo cancellers.

The information required for the block that calculates the adaption step vector 34 is provided by an activity monitor 35 and by the input signal to the adaptive filter 31. The inhibition is done as a function of the information provided by the activity monitor 35 and, additionally, as a function of a fixed and "a priori" established strategy, though changeable at the criterion of the designer.

The activity monitor 35 has the function of detecting double-talking in order to completely inhibit the updating of the coefficients of the adaptive filter 31, using the information provided by the activity detectors on the transmission line 36 and the reception line 37. This line activity information is also used to guide the operation of the gain controller 39, which, in turn, controls the values of attenuation to be inserted in the transmission and reception lines, 38 and 40 respectively.

In addition, the activity monitor 35 receives information from the transmission and reception lines in order to determine the local spectral characteristics of the voice signals and the spectral uniformity.

## Claims

1. Acoustic echo adaptive cancellation device comprising a filtering stage (1) carried out in a mixed form in both the time-domain and the frequency-domain, a substraction stage (2) for subtracting an estimated echo component (12) from the near signal (13) and an adaptation stage (3) of the filtering coefficients (24) to be used in the filtering stage (1), where the adaptation stage (3) comprises means for sectioning (17) and fast Fourier transformation (18) of the near signal plus residual echo (15) and activity monitoring means (19) of the transmission and reception lines for the detection of double-talking, **characterised** in that the adaptation stage (3) further includes means for forming an inhibition vector (22) controlled by the activity monitoring means (19) and in that the activity monitoring means are adapted to monitor the local spectral characteristics and the spectral uniformity of the near signal, such that the inhibition vector (22) indicates the sections of an adaptive filter (31) that are to be updated at each iteration.

2. Acoustic echo adaptive cancellation device according to claim 1, **characterised** by an inhibition block (33) which generates the inhibition vector (22).

3. Acoustic echo adaptive cancellation device according to claim 1, **characterised** in that the adaptation stage (3) also comprises means for calculating an adaptation step vector as a function of a lower value between a maximum permissible value and individual values for each spectral bar that are inversely proportional to the power of said spectral bars and means for weighting the adaption step vector by a decreasing function depending on the power of the residual echo.

4. Acoustic echo adaptive cancellation device according to claim 3, **characterised** by an adaptive step block (34) controlled by the activity monitoring means (19) which generates the adaption step vector.

5. Acoustic echo adaptive cancellation device according to claim 4, **characterised** in that it also comprises an adaptive algorithm block (32) connected to the adaptive step block (34) and to the inhibition block (33), such that it performs an instantaneous tracking of the total power and of the spectral distribution of the near signal, for adjusting the level of adaptation to the degree of echo cancellation at the moment.

## Patentansprüche

1. Adaptive Kompensationseinrichtung für akustische Echos, umfassend eine Filterstufe (1), die in gemischter Form sowohl im Zeitbereich als auch im Frequenzbereich ausgeführt wird, eine Subtraktionsstufe (2) zum Subtrahieren einer geschätzten Echokomponente (12) vom Nahsignal (13) und eine Adaptionsstufe (3) für die Filterkoeffizienten (24), die in der Filterstufe (1) verwendet werden, wobei die Adaptionsstufe (3) ein Mittel zum Aufteilen (17) und zur schnellen Fouriertransformation (18) des Nahsignals plus Restecho (15) und ein Aktivitätsüberwachungsmittel (19) für die Sende- und Empfangsleitungen zur Erkennung eines Doppelsprechens enthält, dadurch gekennzeichnet, daß die Adaptionsstufe (3) desweiteren ein Mittel zur Bildung eines Sperrvektors (22) enthält, das von dem Aktivitätsüberwachungsmittel (19) gesteuert wird, und dadurch, daß das Aktivitätsüberwachungsmittel so ausgelegt ist, daß es die örtliche spektrale Charakteristik und die spektrale Gleichförmigkeit des Nahsignals überwacht, so daß der Sperrvektor (22) die Abschnitte eines adaptiven Filters (31) anzeigt, die während jeder Iteration aktualisiert werden sollen.

2. Adaptive Kompensationseinrichtung für akustische Echos gemäß Anspruch 1, gekennzeichnet durch einen Sperrblock (33), welcher den Sperrvektor (22) erzeugt.

3. Adaptive Kompensationseinrichtung für akustische Echos gemäß Anspruch 1, dadurch gekennzeichnet, daß die Adaptionsstufe (3) ebenfalls ein Mittel zur Berechnung eines Adaptionsschrittvektors als Funktion eines niedrigeren Wertes aus einem maximal zulässigen Wert und einzelner Werte für jedes Spektralband, die der Leistung des jeweiligen Spektralbandes umgekehrt proportional sind, und ein Mittel zur Gewichtung des Adaptionsschrittvektors mit einer in Abhängigkeit von der Leistung des Restechos monoton fallenden Funktion enthält.

4. Adaptive Kompensationseinrichtung für akustische Echos gemäß Anspruch 3, gekennzeichnet durch einen Adaptionsschrittblock (34), welcher den Adaptionsschrittvektor erzeugt und durch das Aktivitätsüberwachungsmittel (19) gesteuert wird.

5. Adaptive Kompensationseinrichtung für akustische Echos gemäß Anspruch 4, dadurch gekennzeichnet, daß sie ebenfalls einen Adaptionsalgorithmusblock (32) enthält, der mit dem Adaptionsschrittblock (34) und dem Sperrblock (33) verbunden ist, so daß er die Gesamtleistung und die spektrale Verteilung des Nahsignals kontinuierlich verfolgt, um das Adaptionsniveau an den Grad der momentanen Echokompensation anzupassen.

## Revendications

1. Dispositif pour l'annulation adaptative d'un écho acoustique comprenant un stade de filtrage (1) exécuté sous forme de mélange tant dans le domaine temps que dans le domaine fréquence, un stade de soustraction (2) pour soustraire du signal rapproché (13) une composante d'écho estimée (12) et un stade d'adaptation (3) des coefficients de filtrage (24) devant être utilisée dans le stade de filtrage (1), où le stade d'adaptation (3) comprend des moyens pour le sectionnement (17) et la transformation accélérée de Fourier (18) du signal rapproché plus l'écho résiduel (15) et des moyens de surveillance d'activité (19) des lignes de transmission et de réception pour la détection de la diaphonie, caractérisé en ce que le stade d'adaptation (3) comprend en outre des moyens pour former un vecteur d'inhibition (22) commande par les moyens de surveillance d'activité (19) et en ce que les moyens de surveillance d'activité sont destinés à surveiller la caractéristique spectrale locale et l'uniformité spectrale du signal rapproché, de sorte que le vecteur d'inhibition (22) indique les sections d'un filtre adaptatif (31) qui doivent être mises à jour à chaque itération.

2. Dispositif pour l'annulation adaptative d'un écho acoustique selon la revendication 1, caractérisé par un bloc d'inhibition (33) qui engendre le vecteur d'inhibition (22).

3. Dispositif pour l'annulation adaptative d'un écho acoustique selon la revendication 1, caractérisé en ce que le stade d'adaptation (3) comprend aussi des moyens pour calculer un vecteur d'étape d'adaptation en fonction d'une valeur plus faible entre une valeur maximum permise et des valeurs individuelles pour chaque raie spectrale qui sont inversement proportionnelles à la puissance desdites raies spectrales et des moyens pour pondérer le vecteur d'étape d'adaptation par une fonction décroissante dépendant de la puissance de l'écho résiduel.

4. Dispositif pour l'annulation adaptative d'un écho acoustique selon la revendication 3, caractérisé par un bloc d'étape adaptative (34) commandé par les moyens de surveillance d'activité (19) qui engendre le vecteur d'étape d'adaptation.

5. Dispositif pour l'annulation adaptative d'un écho acoustique selon la revendication 4, caractérisé en ce qu'il comprend aussi un bloc d'algorithme adaptatif (32) relié au bloc d'étape adaptative (34) et au bloc d'inhibition (33), de sorte qu'il exécute une poursuite instantanée de la puissance totale et de la distribution spectrale du signal rapproché, afin d'ajuster le niveau de l'adaptation au degré d'annulation de l'écho à ce moment là.
